# EUROPEAN PATENT APPLICATION

(11) **EP 3 378 311 A1**
(43) Date of publication of application: **26.09.2018**
(21) Application number: 16866100.7
(22) Date of filing: 25.10.2016
(51) Int. Cl.: A01N 25/34, A01N 37/36, A01N 55/00, A01N 59/16, A01N 59/26, A01P 1/00, A01P 3/00

(54) **ANTIVIRAL FILM**

(30) Priority: 20.11.2015 JP 2015227906
(71) Applicant: FUJIFILM Corporation, Tokyo 106-8620 (JP)
(72) Inventor: HAMANO Mitsumasa, Fujinomiya-shi Shizuoka 418-8666 (JP); SATO Naotoshi, Fujinomiya-shi Shizuoka 418-8666 (JP)
(74) Representative: Hoffmann Eitle
(86) International application number: PCT/JP2016/081521
(87) International publication number: WO 2017/086098

(57) **Abstract**

Provided is an antiviral film which is excellent in antiviral properties. The antiviral film includes a silicon-containing compound, in which a pH of a film surface is lower than or equal to 6. The antiviral film may further include an antibacterial agent fine particle. The antiviral film may further include an acidic material.

## Description

### BACKGROUND OF THE INVENTION

### 1. Field of the Invention

The present invention relates to an antiviral film.

### 2. Description of the Related Art

A composition for forming a coating film (an antibacterial film) having antibacterial properties is known in the related art (for example, refer to JP1989-178563A (JP-H01-178563A)).

### SUMMARY OF THE INVENTION

Recently, importance of hygiene control for viruses such as norovirus has been increasing.

The present inventors investigated the antibacterial film of the related art, and as a result, the present inventors found that there were cases in which antiviral properties were inadequate.

Therefore, an object of the present invention is to provide an antiviral film which is excellent in antiviral properties.

The present inventors conducted extensive research, and as a result, the present inventors found that the above object is achieved by setting a pH of the film surface to be in a specific range, thus completing the present invention.

That is, the present invention provides the following [1] to [4].
[1] An antiviral film comprising: a silicon-containing compound, in which a pH of a film surface is lower than or equal to 6.
[2] The antiviral film according to [1], further comprising: an antibacterial agent fine particle.
[3] The antiviral film according to [1] or [2], further comprising: an acidic material.
[4] The antiviral film according to [3], in which the acidic material is at least one selected from the group consisting of phosphoric acid and malic acid.

According to the present invention, an antiviral film which is excellent in antiviral properties can be provided.

### DESCRIPTION OF THE PREFERRED EMBODIMENTS

Hereinafter, an antiviral film of the present invention will be described.

In the present specification, a numerical range expressed using "to" indicates a range including numerical values denoted before and after "to" as a lower limit value and an upper limit value.

The antiviral film of the present invention is an antiviral film including a silicon-containing compound, in which a pH of a film surface is lower than or equal to 6. The antiviral film of the present invention exhibits favorable antiviral properties by setting the pH of the film surface to be lower than or equal to 6.

Suitable examples of the antiviral film of the present invention include a coating film formed using an antiviral solution which will be described below. Hereinafter, the antiviral solution which is used to form the antiviral film of the present invention will be referred to as "the antiviral solution of the present invention" for convenience.

Hereinafter, the antiviral solution of the present invention will be described first, and then the antiviral film of the present invention will be described.

### [Antiviral Solution]

The antiviral solution of the present invention is a liquid used to form the antiviral film of the present invention and includes each of the components described below. Hereinafter, first, each of the components included in the antiviral solution of the present invention will be described in detail.

### [Acidic Material]

It is preferable that the antiviral solution of the present invention includes an acidic material, from the viewpoint of setting the pH of the film surface of the coating film obtained using the antiviral solution of the present invention (the antiviral film of the present invention) to be lower than or equal to 6.

Examples of the acidic material used in the present invention include an inorganic acid such as phosphoric acid and sulfuric acid; an organic acid such as malic acid, lactic acid, tartaric acid, salicylic acid, gluconic acid, adipic acid, phytic acid, fumaric acid, succinic acid, ascorbic acid, sorbic acid, glyoxylic acid, Meldrum's acid, glutamic acid, picric acid, and aspartic acid; an alkali metal salt of these acids; and the like, and one of these may be used independently, or two or more thereof may be used in combination.

Among these, at least one selected from the group consisting of phosphoric acid and malic acid is preferable as the acidic material, for the reason that the antiviral properties of the coating film that is obtained are more excellent.

A content of the acidic material with respect to the total mass of the antiviral solution of the present invention is, for example, higher than or equal to 0.01% by mass, and the content of the acidic material with respect to the total mass of the antiviral solution of the present invention is preferably higher than or equal to 0.3% by mass and more preferably higher than or equal to 0.8% by mass, from the viewpoint of lowering the pH of the film surface of the coating film that is obtained.

On the other hand, a lower limit of the content is not particularly limited, and the lower limit is, for example, lower than or equal to 20% by mass and preferably lower than or equal to 15% by mass.

### [Antibacterial Agent Fine Particles]

It is preferable that the antiviral solution of the present invention includes antibacterial agent fine particles, and it is preferable that the antibacterial agent fine particles at least include a silver-carrying inorganic oxide.

### <Silver-Carrying Inorganic Oxide>

The silver-carrying inorganic oxide contains silver and an inorganic oxide which is a carrier that carries the silver.

A type of the silver (a silver atom) is not particularly limited. A form of the silver is also not particularly limited, and examples of the form of the silver include a form such as metal silver, a silver ion, and a silver salt (including a silver complex). In the present specification, the silver complex is included within the range of the silver salt.

Examples of the silver salt include silver acetate, silver acetylacetonate, silver azide, silver acetylide, silver arsenate, silver benzoate, silver hydrogen fluoride, silver bromate, silver bromide, silver carbonate, silver chloride, silver chlorate, silver chromate, silver citrate, silver cyanate, silver cyanide, silver (cis,cis-1,5-cyclooctadiene)-1,1,1,5,5,5-hexafluoroacetylacetonate, silver diethyldithiocarbamate, silver (I) fluoride, silver (II) fluoride, silver 7,7-dimethyl-1,1,1,2,2,3,3-heptafluoro-4,6-octanedioate, silver hexafluoroantimonate, silver hexafluoroarsenate, silver hexafluorophosphate, silver iodate, silver iodide, silver isothiocyanate, potassium silver cyanide, silver lactate, silver molybdate, silver nitrate, silver nitrite, silver (I) oxide, silver (II) oxide, silver oxalate, silver perchlorate, silver perfluorobutyrate, silver perfluoropropionate, silver permanganate, silver perrhenate, silver phosphate, silver picrate monohydrate, silver propionate, silver selenate, silver selenide, silver selenite, silver sulfadiazine, silver sulfate, silver sulfide, silver sulfite, silver telluride, silver tetrafluoroborate, silver tetraiodomercurate, silver tetratungstate, silver thiocyanate, silver p-toluenesulfonate, silver trifluoromethanesulfonate, silver trifluoroacetate, silver vanadate, and the like.

As an example of the silver complex, a histidine silver complex, a methionine silver complex, a cysteine silver complex, an aspartate silver complex, a pyrrolidonecarboxylic acid silver complex, an oxotetrahydrofuran carboxylic acid silver complex, an imidazole silver complex, or the like is exemplified.

Meanwhile, examples of the inorganic oxide which is the carrier include calcium zinc phosphate, calcium phosphate, zirconium phosphate, aluminum phosphate, calcium silicate, activated carbon, activated alumina, silica gel, glass (at least one compound selected from the group consisting of silicon oxide, phosphorus oxide, magnesium oxide, sodium oxide, aluminum oxide, zinc oxide, calcium oxide, boron oxide, and potassium oxide), zeolite, apatite, hydroxyapatite, titanium phosphate, potassium titanate, hydrated bismuth oxide, hydrated zirconium oxide, hydrotalcite, and the like.

Suitable examples of such a silver-carrying inorganic oxide include silver-carrying zeolite, silver-carrying apatite, silver-carrying glass, silver-carrying zirconium phosphate, silver-carrying calcium silicate, and the like, and among these, silver-carrying apatite and silver-carrying glass are preferable, and silver-carrying glass is more preferable.

The antibacterial agent fine particles may contain an antibacterial agent in addition to the silver-carrying inorganic oxide, and examples of the antibacterial agent include organic antibacterial agent, an inorganic antibacterial agent which does not contain silver, and the like.

Examples of the organic antibacterial agent include a phenol ether derivative, an imidazole derivative, a sulfone derivative, an N-haloalkylthio compound, an anilide derivative, a pyrrole derivative, a quaternary ammonium salt, a pyridine-based compound, a triazine-based compound, a benzisothiazoline-based compound, isothiazoline-based compound, and the like.

Examples of the inorganic antibacterial agent which does not contain silver include an antibacterial agent which carries a metal such as copper and zinc on the carrier described above.

The antibacterial agent fine particles may be a form including the antibacterial agent in addition to the silver-carrying inorganic oxide or may be a form substantially only consisting of the silver-carrying inorganic oxide.

A content of the silver-carrying inorganic oxide in the antibacterial agent fine particle is preferably higher than or equal to 60% by mass, more preferably higher than or equal to 70% by mass, and even more preferably higher than or equal to 95% by mass, in terms of a solid content.

### <Average Particle Diameter of Antibacterial Agent Fine Particles>

An average particle diameter of the antibacterial agent fine particles is preferably smaller than or equal to 1.0 µm, more preferably smaller than or equal to 0.9 µm, and even more preferably smaller than or equal to 0.7 µm. A lower limit of the average particle diameter is not particularly limited, and the lower limit is, for example, larger than or equal to 0.05 µm.

In the present invention, a 50% volume cumulative diameter (D50) is measured three times using a laser diffraction/scattering particle size distribution analyzer manufactured by HORIBA, Ltd., and an average value of the values measured three times is used as the average particle diameter.

The average particle diameter of the antibacterial agent fine particles can be adjusted by a method known in the related art. As the method known in the related art, for example, dry grinding or wet grinding can be adopted. In the dry grinding, for example, a mortar, a jet mill, a hammer mill, a pin mill, a tumbling mill, a vibrating mill, a planetary mill, a beads mill, or the like is suitably used. In the wet grinding, various ball mills, a high speed rotary crusher, a jet mill, a beads mill, an ultrasound homogenizer, a high pressure homogenizer, or the like is suitably used.

For example, regarding the beads mill, the average particle diameter can be controlled by adjusting a diameter, a type, and a mixed amount of the beads which serve as media.

In the present invention, for example, wet grinding is performed by dispersing the antibacterial agent fine particles which are objects for grinding in ethanol or water and mixing and vibrating zirconia beads having different sizes, allowing the average particle diameter of the antibacterial agent fine particles to be adjusted. However, the method is not limited to this method, and a suitable method for controlling a particle diameter may be selected.

### <Content of Antibacterial Agent Fine Particles>

A content of the antibacterial agent fine particles with respect to the total mass of the antiviral solution of the present invention is preferably lower than or equal to 1.0% by mass, more preferably lower than or equal to 0.2% by mass, and even more preferably lower than or equal to 0.1% by mass, in terms of a solid content. A lower limit of the content is not particularly limited, and the lower limit is, for example, higher than or equal to 0.001% by mass.

A content of the antibacterial agent fine particles with respect to the mass of the total solid content of the antiviral solution of the present invention is preferably lower than or equal to 20% by mass, more preferably lower than or equal to 4% by mass, and even more preferably lower than or equal to 3% by mass, in terms of a solid content. A lower limit of the content is not particularly limited, and the lower limit is, for example, higher than or equal to 0.1% by mass.

A content of silver in the antibacterial agent fine particles is not particularly limited, and the content is, for example, 0.1% to 30% by mass and preferably 0.3% to 10% by mass, with respect to the total mass of the antibacterial agent fine particles.

### [Binder]

It is preferable that the antiviral solution of the present invention includes a binder containing at least one kind of silane compound. The binder preferably exhibits hydrophilicity.

### <Silane Compound>

Examples of the silane compound include a siloxane compound (a siloxane oligomer) represented by General Formula (1').

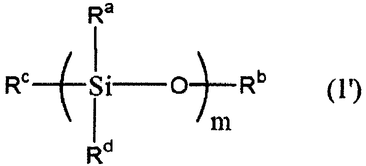

Here, R^{a}, R^{b}, R^{c}, and R^{d} in General Formula (1') each independently represent a hydrogen atom or an organic group. m represents an integer of 2 to 100. Each of R^{a} to R^{d} may be the same as each other or different from each other. R^{a} to R^{d} may be bonded to each other to form a ring.

Examples of the organic group represented by R^{a} to R^{d} include an alkyl group having 1 to 20 carbon atoms, an aryl group having 6 to 20 carbon atoms, a heterocyclic group having 4 to 16 carbon atoms, and the like.

R^{a} to R^{d} are preferably a hydrogen atom, an alkyl group having 1 to 12 carbon atoms, or an aryl group having 6 to 14 carbon atoms and more preferably a hydrogen atom, an alkyl group having 1 to 6 carbon atoms, or an aryl group having 6 to 10 carbon atoms. The alkyl group represented by R^{a} to R^{d} may be branched. The organic group represented by R^{a} to R^{d} may have a substituent, and the substituent may further have a substituent.

Preferable specific examples of R^{a} to R^{d} include a hydrogen atom, a methyl group, an ethyl group, a propyl group, a butyl group, an isopropyl group, an n-butyl group, a tert-butyl group, an n-pentyl group, an n-hexyl group, a cyclohexyl group, a phenyl group, a naphthyl group, and the like.

Examples of the silane compound include a silane compound having an alkoxy group having 1 to 6 carbon atoms, such as a methoxy group and an ethoxy group, and suitable examples thereof include a siloxane compound (a siloxane oligomer) represented by General Formula (1).

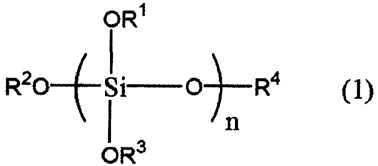

Here, R¹ to R⁴ in General Formula (1) each independently represent an organic group having 1 to 6 carbon atoms. n represents an integer of 2 to 100. The organic group may be linear or branched.

R¹ to R⁴ in General Formula (1) each independently represent an organic group having 1 to 6 carbon atoms. Each of R¹ to R⁴ may be the same as each other or different from each other. R¹ to R⁴ may be linear or may have a branch. The organic group represented by R¹ to R⁴ is preferably an alkyl group having 1 to 6 carbon atoms. Examples of the alkyl group represented by R¹ to R⁴ include a methyl group, an ethyl group, a propyl group, an isopropyl group, an n-butyl group, a tert-butyl group, an n-pentyl group, an n-hexyl group, a cyclohexyl group, and the like. By setting the number of carbon atoms in the alkyl group represented by R¹ to R⁴ to be 1 to 6, it is possible to increase hydrolyzability of the siloxane oligomer. In view of easiness of hydrolysis, the organic group represented by R¹ to R⁴ is more preferably an alkyl group having 1 to 4 carbon atoms and even more preferably an alkyl group having 1 or 2 carbon atoms.

n in General Formula (1) is preferably an integer of 2 to 20. By setting n to be in the range, viscosity of the solution containing a hydrolysate can be within a suitable range, and reactivity of the siloxane oligomer can be controlled to be in a preferable range. In a case where n exceeds 20, there are cases where viscosity of the solution containing a hydrolysate of the siloxane oligomer becomes excessively high, and thus handling becomes difficult. On the other hand, in a case where n is 1, there are cases where controlling reactivity of alkoxysilane becomes difficult, and hydrophilicity is not easily exhibited after applying the solution, n is preferably 3 to 15 and more preferably 5 to 10.

At least a part of the siloxane oligomer is in a hydrolyzed state by being mixed with a water component. The hydrolysate of the siloxane oligomer is obtained by reacting the siloxane oligomer with the water component and changing an alkoxy group bonded to silicon to a hydroxy group. In the case of hydrolysis, it is not required that all of the alkoxy groups are necessarily reacted, however, it is preferable that as many alkoxy groups are subjected to hydrolysis as possible, in order to exhibit hydrophilicity after applying the solution. In the case of the hydrolysis, minimum amount of water component that is required is a molar amount equivalent to that of the alkoxy group in the siloxane oligomer, however, in order to smoothly proceed the reaction, it is preferable that a large excess amount of water is present.

Although the hydrolysis reaction proceeds at room temperature, the temperature may be increased in order to accelerate the reaction. In addition, it is preferable that reaction time is long, for further acceleration of the reaction. In a case where the reaction takes place under the presence of a catalyst which will be described below, the hydrolysate can be obtained approximately within half a day.

The hydrolysis reaction is a reversible reaction, and condensation is initiated between hydroxy groups in the hydrolysates of the siloxane oligomer, in a case where water is removed from the system. Accordingly, in a case where an aqueous solution of the hydrolysate is obtained by reacting the siloxane oligomer with a large excess of water, it is preferable to use the aqueous solution as it is, without forcibly isolating the hydrolysate from the aqueous solution of the hydrolysate.

The antiviral solution of the present invention can contain water as a solvent. By using the water component as the solvent, burden on the health of the worker during handling and burden on the environment can be reduced, and it is possible to suppress condensation of the hydrolysates of the siloxane oligomer in the solution during storage.

As the siloxane oligomer represented by General Formula (1), a commercially available product can be used. Specific examples of the commercially available product include MKC (registered trademark) SILICATE manufactured by Mitsubishi Chemical Corporation.

The binder may be a form including a binder other than the silane compound described above or may be a form substantially only consisting of the silane compound described above.

A content of the silane compound described above in the binder is preferably higher than or equal to 70% by mass, more preferably higher than or equal to 80% by mass, and even more preferably higher than or equal to 90% by mass.

### <Content of Binder>

A content of the binder with respect to the mass of the total solid content of the antiviral solution of the present invention is preferably 3% to 95% by mass, more preferably 5% to 80% by mass, and even more preferably 10% to 60% by mass.

A content of the binder with respect to the total mass of the antiviral solution of the present invention is preferably lower than or equal to 10% by mass, more preferably lower than or equal to 5% by mass, and even more preferably lower than or equal to 3% by mass.

### [Solvent]

It is preferable that the antiviral solution of the present invention includes a solvent, and the solvent is preferably at least one selected from the group consisting of alcohol and water.

The water is not particularly limited, and examples thereof include pure water.

The alcohol is preferable, since the alcohol kills a wide range of microorganisms within a short period of time.

The alcohol is not particularly limited, and examples thereof include a lower alcohol. Suitable examples of the lower alcohol include a lower alcohol having 1 to 6 carbon atoms, and specific examples thereof include methanol, ethanol, n-propanol, isopropanol, n-butanol, 2-butanol, i-butanol, t-butanol, n-pentanol, t-amyl alcohol, n-hexanol, and the like. One of these may be used independently, and two or more of these may be used in combination.

Among these, methanol, ethanol, isopropanol, butanol, and n-propanol are preferable, and ethanol and isopropanol are more preferable.

The alcohol may be a higher alcohol. Suitable examples of the higher alcohol include a higher alcohol having 7 or more carbon atoms (preferably 7 to 15 carbon atoms), and specific examples thereof include capryl alcohol, lauryl alcohol, myristyl alcohol, and the like.

Examples of alcohol other than those described above include phenylethyl alcohol, ethylene glycol, ethylene glycol mono-n-butyl ether, diethylene glycol mono-n-butyl ether, triethylene glycol mono-n-butyl ether, tetraethylene glycol mono-n-butyl ether, dipropylene glycol monobutyl ether, and the like. One of these may be used independently, or two or more of these may be used in combination.

A content of the alcohol with respect to the total mass of the antiviral solution of the present invention is preferably higher than or equal to 10% by mass, more preferably higher than or equal to 50% by mass, even more preferably higher than or equal to 65% by mass, and particularly preferably higher than or equal to 80% by mass. An upper limit of the content is not particularly limited, and the upper limit is, for example, lower than or equal to 99% by mass.

A content of the alcohol in the solvent is, for example, 5% to 100% by mass, and the content is preferably 30% to 95% by mass, and more preferably 40% to 95% by mass.

A content of the mass of the total solid content with respect to the total mass of the antiviral solution of the present invention is preferably 0.1% to 30% by mass, more preferably 0.2% to 20%, and even more preferably 0.5% to 10%.

The solvent may contain another hydrophilic organic solvent besides the alcohol. Examples of another hydrophilic organic solvent include benzole, toluol, methyl ethyl ketone (MEK), acetone, 10% alcohol solution of denatonium benzoate, ethyl acetate, hexane, ethyl ether, geraniol, 8-acetylated sucrose, brucine, linalool, linalyl acetate, acetic acid, butyl acetate, and the like.

In a case where the solvent contains another hydrophilic organic solvent besides the alcohol, a content of another hydrophilic organic solvent besides the alcohol in the solvent is, for example, preferably lower than or equal to 20% by mass.

However, the solvent is more preferably a form substantially only containing at least one selected from the group consisting of alcohol and water.

In the present invention, a diluent (water, alcohol, or the like) for each component is also contained in the solvent.

### [Dispersing Agent]

In a case where the antiviral solution of the present invention includes antibacterial agent fine particles, it is preferable that the antiviral solution of the present invention includes a dispersing agent, from the viewpoint of enhancing dispersibility of the antibacterial agent fine particles. As the dispersing agent, a nonionic dispersing agent or an anionic dispersing agent is preferably used. From the viewpoint of affinity to the antibacterial agent fine particles, for example, a dispersing agent (an anionic dispersing agent) having an anionic polar group such as a carboxy group, a phosphoric acid group, and a hydroxyl group is more preferable.

As the anionic dispersing agent, a commercially available product can be used, and specific examples thereof include a trade name DISPERBYK (registered trademark) -110, -111, -116, -140, -161, -162, -163, -164, -170, -171, -174, -180, and -182 manufactured by BYK Additives & Instruments.

A content of the dispersing agent (particularly, the anionic dispersing agent) with respect to the content of the antibacterial agent fine particles described above is, for example, higher than or equal to 50% by mass in terms of a solid content, and the content is preferably higher than or equal to 200% by mass and more preferably higher than or equal to 400% by mass, in terms of a solid content. On the other hand, an upper limit of the content is not particularly limited, and the upper limit is, for example, lower than or equal to 1500% by mass.

### [Catalyst]

In a case where the antiviral solution of the present invention includes the siloxane oligomer described above as the binder, it is preferable that the antiviral solution of the present invention further includes a catalyst for accelerating the condensation thereof. After applying the antiviral solution of the present invention, the solution is dried, so as to remove moisture. Thus, a bond is formed by condensation between hydroxy groups in the hydrolysates of the siloxane oligomer (at least some of the hydroxy groups), and a stable coating film (antiviral film) is obtained. In this case, by including the catalyst that accelerates the condensation of the siloxane oligomers, formation of the antiviral film can proceed more rapidly.

The catalyst that accelerates the condensation of the siloxane oligomers is not particularly limited, and examples thereof include an alkali catalyst, an organic metal catalyst and the like. Examples of the alkali catalyst include sodium hydroxide, potassium hydroxide, tetramethylammonium hydroxide, and the like. Examples of the organic metal catalyst include an aluminum chelate compound such as aluminum bis(ethyl acetoacetate) mono(acetylacetonate), aluminum tris(acetylacetonate), and aluminum ethyl acetoacetate diisopropylate; a zirconium chelate compound such as zirconium tetrakis(acetylacetonate) and zirconium bis(butoxy) bis(acetylacetonate); a titanium chelate compound such as titanium tetrakis(acetylacetonate) and titanium bis(butoxy) bis(acetylacetonate); an organic tin compound such as dibutyl tin diacetate, dibutyl tin dilaurate, and dibutyl tin dioctate; and the like.

Among these, an organic metal catalyst is preferable, and an aluminum chelate compound or a zirconium chelate compound is more preferable.

A content of the catalyst that accelerates the condensation of the siloxane oligomers with respect to the mass of the total solid content of the antiviral solution of the present invention is preferably 0.1% to 20% by mass, more preferably 0.2% to 15% by mass, and even more preferably 0.3% to 10% by mass, in terms of a solid content.

The catalysts that accelerate the condensation of the siloxane oligomers are also useful in the hydrolysis of the siloxane oligomer.

### [Surfactant]

The antiviral solution of the present invention may include a surfactant (a component that exhibits surface activity). By including a surfactant, coating properties can be enhanced, and surface tension can be reduced, thereby enabling more even coating.

As the surfactant, any one of a nonionic surfactant, an ionic (anionic, cationic, or amphoteric) surfactant, and the like can be suitably used. In a case where an ionic surfactant is added in large excess, there are cases where an amount of electrolytes in the system increases, and silica fine particles and the like aggregate. Therefore, in a case where an ionic surfactant is used, it is preferable that the antiviral solution further includes a component exhibiting nonionic surface activity.

Examples of the nonionic surfactant include polyalkylene glycol monoalkyl ethers, polyalkylene glycol monoalkyl esters, polyalkylene glycol monoalkyl esters-monoalkyl ethers, and the like. More specific examples of the nonionic surfactant include polyethylene glycol monolauryl ether, polyethylene glycol monostearyl ether, polyethylene glycol monocetyl ether, polyethylene glycol monolauryl ester, polyethylene glycol monostearyl ester, and the like.

Examples of the ionic surfactant include an anionic surfactant such as alkyl sulfate, alkyl benzene sulfonate, and alkyl phosphate; a cationic surfactant such as an alkyl trimethyl ammonium salt and a dialkyl dimethyl ammonium salt; an amphoteric-type surfactant such as alkylcarboxybetaine; and the like.

A content of the surfactant with respect to the total mass of the antiviral solution of the present invention is, for example, higher than or equal to 0.001% by mass in terms of a solid content, and the content is preferably higher than or equal to 0.005% by mass and more preferably higher than or equal to 0.01% by mass, in terms of a solid content.

Meanwhile, a content of the surfactant with respect to the mass of the total solid content of the antiviral solution of the present invention is preferably lower than or equal to 10% by mass, more preferably lower than or equal to 8% by mass, and even more preferably lower than or equal to 5% by mass, in terms of a solid content.

### [Silica Particles]

The antiviral solution of the present invention may include silica particles. The silica particles increase physical resistance of the antiviral film of the present invention which is formed using the antiviral solution of the present invention and exhibits hydrophilicity as well. That is, the silica particles take the role as a hard filler, and contribute to hydrophilicity, since the silica particles have hydroxy groups on the surfaces thereof.

A shape of the silica particles is not particularly limited, and examples thereof include a spherical shape, a plate shape, a needle shape, a necklace shape, and the like, and a spherical shape is preferable. The silica may be a shell including air, an organic resin, and the like in the core thereof. A surface treatment may be performed on the surface of the silica particle for dispersion stabilization.

An average particle diameter (a primary particle diameter) of the silica particles is preferably smaller than or equal to 100 nm, more preferably smaller than or equal to 50 nm, and even more preferably smaller than or equal to 30 nm. The particle diameter of the silica particles can be measured in the same manner as the antibacterial agent fine particles described above.

Two or more kinds of silica particles having different shapes and sizes may be used in combination.

A content of the silica fine particles with respect to the mass of the total solid content of the antiviral solution of the present invention is preferably 0% to 95% by mass, more preferably 10% to 90% by mass, and even more preferably 20% to 80% by mass, in terms of a solid content. A content of the silica fine particles with respect to the total mass of the antiviral solution of the present invention is preferably lower than or equal to 30% by mass, more preferably lower than or equal to 20% by mass, and even more preferably lower than or equal to 10% by mass, in terms of a solid content.

### [Method for Producing Antiviral Solution]

The antiviral solution of the present invention is obtained by suitably mixing each of the components described above.

The antiviral solution of the present invention can further include other additives (for example, a preservative, a deodorizer, a fragrance, or the like) as necessary, within a range that does not impair the object of the present invention.

### [pH of Antiviral Solution]

A pH of the antiviral solution of the present invention is not particularly limited, as long as the pH of the film surface of the antiviral film of the present invention obtained using the antiviral solution of the present invention is lower than or equal to 6.

In the present invention, the pH of the antiviral solution is measured using a pH meter HM-30R manufactured by DKK-TOA CORPORATION.

### [Antibacterial Film]

The antiviral film of the present invention is an antiviral film including a silicon-containing compound, in which the pH of the film surface is lower than or equal to 6. It is preferable that the antiviral film of the present invention is obtained using the antiviral solution of the present invention described above.

### [Silicon-Containing Compound]

The antiviral film of the present invention includes a silicon-containing compound. The silicon-containing compound constitutes, for example, the film itself.

The silicon-containing compound is not particularly limited, and examples thereof include the silane compound which was described as the binder that can be contained in the antiviral solution of the present invention described above. In particular, suitable examples of the silane compound include the siloxane compound (the siloxane oligomer) described above, a hydrolysate thereof, a condensate thereof (a hydrolytic condensate), and the like.

In the present invention, since the antiviral solution of the present invention includes the siloxane compound described above, the antiviral film of the present invention obtained using the antiviral solution also includes at least one selected from the group consisting of the siloxane compound, a hydrolysate thereof, and a hydrolytic condensate thereof.

### [Antibacterial Agent Fine Particles]

It is preferable that the antiviral film of the present invention further includes antibacterial agent fine particles. By including the antibacterial agent fine particles, the antiviral film of the present invention has excellent antibacterial properties.

Examples of the antibacterial agent fine particles that can be included in the antiviral film of the present invention are the same as the examples of the antibacterial agent fine particles that can be included in the antiviral solution of the present invention, and thus, description thereof will be omitted here.

Since the antiviral solution of the present invention described above includes the antibacterial agent fine particles, the antiviral film of the present invention obtained using the antiviral solution also includes the antibacterial agent fine particles.

### [Acidic Material]

It is preferable that the antiviral film of the present invention further includes an acidic material.

Examples of the acidic material that can be included in the antiviral film of the present invention are the same as the examples of the acidic material that can be included in the antiviral solution of the present invention, and thus, description thereof will be omitted here.

Since the antiviral solution of the present invention described above includes the acidic material, the antiviral film of the present invention obtained using the antiviral solution also includes the acidic material.

### [Method for Producing Antiviral Film]

It is preferable that the antiviral film of the present invention is a coating film which is formed using the antiviral solution of the present invention. In this case, the antiviral film of the present invention can be formed by, for example, applying the antiviral solution of the present invention onto a base material and drying the solution.

The base material onto which the antiviral solution of the present invention is applied is not particularly limited, and glass, a resin, a metal, ceramic, fabric, or the like is suitably used. Examples of the resin include polypropylene, polystyrene, polyurethane, an acrylic resin, polycarbonate, polyamide, a fluororesin, latex, polyvinyl chloride, polyolefin, a melamine resin, an acrylonitrile butadiene styrene (ABS) resin, polyester (for example, polyethylene terephthalate (PET), and the like), and the like. A shape of the base material is not particularly limited, and examples thereof include a plate shape, a film shape, a sheet shape, and the like. A surface of the base material may be a flat surface, a concave surface, or a convex surface. An easily adhesive layer known in the related art may be formed on the surface of the base material.

A method for applying the antiviral solution of the present invention is not particularly limited, and examples thereof include a spray method, a brush coating method, a dipping method, an electrostatic coating method, a bar coating method, a roll coating method, a flow coating method, a die coating method, a nonwoven fabric coating method, an ink jet method, a cast method, a spin-coating method, a Langmuir-Blodgett (LB) method, and the like.

The drying of the antiviral solution after the application of the solution may be performed at room temperature or may be performed by heating at 40°C to 120°C. Drying time is, for example, approximately 1 to 30 minutes.

### [pH of Film Surface of Antiviral Film]

The pH of the film surface of the antiviral film of the present invention is lower than or equal to 6, and for the reason that the antiviral properties are more excellent, the pH of the film surface is preferably lower than or equal to 5. A lower limit of the pH of the film surface is not particularly limited, and the lower limit is, for example, higher than or equal to 1.

In the present invention, the pH of the film surface is obtained by adding dropwise 0.02 mL of liquid droplets (pure water) onto the film surface and, after elapse of 1 minute, measuring the pH of the liquid droplets using a pH meter LAQUA F-72 manufactured by HORIBA, Ltd.

### [Film Thickness of Antiviral Film]

A film thickness (an average film thickness) of the antiviral film of the present invention is preferably smaller than or equal to 1.0 µm and more preferably smaller than or equal to 0.5 µm. A lower limit of the film thickness is not particularly limited, and the lower limit is, for example, larger than or equal to 0.01 µm.

In the present invention, the film thickness is obtained in the following manner. First, a sample piece of the antiviral film is embedded in a resin, and a cross section thereof is cut out using a microtome. The cross section that is cut out is observed using an electron scanning microscope, and film thicknesses at the positions of any 10 spots on the antiviral film are measured. The arithmetic average of these film thicknesses is designated as the film thickness (the average film thickness) of the antiviral film.

### [Application of Antiviral Film]

The antiviral film can be used as an antiviral sheet as it is. A method for disposing the antiviral film (the antiviral sheet) on each apparatus may be, for example, forming the antiviral film on a surface (a front surface) of the apparatus by directly applying the antiviral solution of the present invention onto the surface or may be laminating the antiviral film on the surface of the apparatus through a pressure sensitive adhesive layer that has been separately formed.

A base material with an antiviral film can be used as a front surface plate of each apparatus.

The apparatus in which the antiviral film (the antiviral sheet) and the base material with an antiviral film are used is not particularly limited, and examples thereof include a radiography apparatus, a touch panel, and the like.

### Examples

Hereinafter, the present invention will be specifically described with reference to Examples. However, the present invention is not limited to these Examples.

### <Example 1>

Stirring of 367 g of ethanol was initiated in a container. To the stirred ethanol, 60 g of pure water, 14 g of a binder, which is a siloxane compound, ("MKC (registered trademark) SILICATE MS51" manufactured by Mitsubishi Chemical Corporation.), 15 g of aluminum chelate D (aluminum bis(ethyl acetoacetate) mono(acetylacetonate), ethanol dilution: concentration of solid contents of 1% by mass), 60 g of a nonionic surfactant ("EMALEX 715" manufactured by NIHON EMULSION Co., Ltd., pure water dilution: concentration of solid contents of 0.5% by mass), and 10 g of an anionic surfactant (sodium di(2-ethylhexyl)sulfosuccinate, pure water dilution: concentration of solid contents of 0.2% by mass) were added in order. Thereafter, 18 g of isopropanol, 3.6 g of a dispersing agent ("DISPERBYK (registered trademark) -180" manufactured by BYK Additives & Instruments), and 2.4 g of antibacterial agent fine particles (silver-carrying glass, manufactured by Fuji Chemical Industries, Ltd., ethanol dilution: concentration of solid contents of 60% by mass) of which the average particle diameter is controlled to 0.5 µm were added thereto, 5.4 g of phosphoric acid was added thereto, and stirring was performed for 20 minutes, thereby obtaining an antiviral solution A-1.

An easy adhesion treated-surface of a polyethylene terephthalate (PET) base material of which one surface has been subjected to an easy adhesion treatment was coated with the antiviral solution A-1 using a bar coater, and the solution was dried at room temperature for 20 minutes, thereby obtaining an antiviral film B-1 which was a coating film.

### <Example 2>

An antiviral solution A-2 was obtained in the same manner as in Example 1, except that the blending amount of phosphoric acid was changed to 60 g. An antiviral film B-2 was obtained using the antiviral solution A-2, through the same procedure as that in Example 1.

### <Example 3>

An antiviral solution A-3 was obtained in the same manner as in Example 1, except that the blending amount of phosphoric acid was changed to 0.54 g. An antiviral film B-3 was obtained using the antiviral solution A-3, through the same procedure as that in Example 1.

### <Example 4>

An antiviral solution A-4 was obtained in the same manner as in Example 1, except that phosphoric acid was changed to malic acid. An antiviral film B-4 was obtained using the antiviral solution A-4, through the same procedure as that in Example 1.

### <Example 5>

An antiviral solution A-5 was obtained in the same manner as in Example 4, except that the blending amount of malic acid was changed to 60 g. An antiviral film B-5 was obtained using the antiviral solution A-5, through the same procedure as that in Example 1.

### <Example 6>

An antiviral solution A-6 was obtained in the same manner as in Example 1, except that the antibacterial agent fine particles and the dispersing agent were not blended in. An antiviral film B-6 was obtained using the antiviral solution A-6, through the same procedure as that in Example 1.

### <Comparative Example 1>

Stirring of 367 g of ethanol was initiated in a container. To the stirred ethanol, 60 g of pure water, 15 g of aluminum chelate D (aluminum bis(ethyl acetoacetate) mono(acetylacetonate), ethanol dilution: concentration of solid contents of 1% by mass), 60 g of a nonionic surfactant ("EMALEX 715" manufactured by NIHON EMULSION Co., Ltd., pure water dilution: concentration of solid contents of 0.5% by mass), and 10 g of an anionic surfactant (sodium di(2-ethylhexyl)sulfosuccinate, pure water dilution: concentration of solid contents of 0.2% by mass) were added in order. Thereafter, 18 g of isopropanol was added thereto, and stirring was performed for 20 minutes, thereby obtaining an antiviral solution C-1.

An easy adhesion treated-surface of a polyethylene terephthalate (PET) base material of which one surface has been subjected to an easy adhesion treatment was coated with the antiviral solution C-1 using a bar coater, and the solution was dried at room temperature for 20 minutes, thereby obtaining an antiviral film D-1 which was a coating film.

### <Comparative Example 2>

An antiviral solution C-1 was obtained in the same manner as in Comparative Example 1, except that 5.4 g of acetic acid was further added. An antiviral film D-2 was obtained using the antiviral solution C-1, through the same procedure as that in Comparative Example 1.

### (pH of Solution)

A pH (a pH of a solution) of each antiviral solution was obtained by the measurement method described above. The results are shown in Table 1 below.

### (pH of Film Surface)

A pH of a film surface of each antiviral film was obtained by the measurement method described above. The results are shown in Table 1 below.

### (Film Thickness)

A film thickness (an average film thickness, unit: µm) of each antiviral film was obtained by the measurement method described above. The results are shown in Table 1.

### (Antiviral Properties)

Evaluation of antiviral properties of the antiviral films was performed by the method based on the evaluation method described in JIS Z 2801. An experiment was performed by changing the bacterial liquid to feline calicivirus (a substitute for norovirus) and setting the duration of contact to 24 hours. A viral activity value after the experiment was measured, and evaluation was performed according to the following criteria. The results are shown in Table 1 below. "A" or "B" is practically preferable.
"A": The antibacterial activity value is greater than or equal to 3.0
"B": The antibacterial activity value is greater than or equal to 1.0 and smaller than 3.0
"C": The antibacterial activity value is smaller than 1.0

### (Antibacterial Properties)

Evaluation of antibacterial properties of the antiviral films was performed by the method based on the evaluation method described in JIS Z 2801. An experiment was performed by changing the duration of contact with the bacterial liquid to 3 hours. An antibacterial activity value after the experiment was measured, and evaluation was performed according to the following criteria. The results are shown in Table 1 below. "A" or "B" is practically preferable.
"A": The antibacterial activity value is greater than or equal to 2.5
"B": The antibacterial activity value is greater than or equal to 1.0 and smaller than 2.5
"C": The antibacterial activity value is smaller than 1.0

**[Table 1]**

| | Acidic material | | Antibacterial agent fine particles | Binder | Solvent | pH of solution | pH of film surface | Film thickness [µm] | Evaluation | |
|---|---|---|---|---|---|---|---|---|---|---|
| | Kind | Content (with respect to total mass) [% by mass] | Silver-carrying inorganic oxide | Kind | Presence or absence of alcohol | | | | Antiviral properties | Antibacterial properties |
| Example 1 | Phosphoric acid | 1 | Silver-carrying glass | Siloxane compound | Present | 2.2 | 4.8 | 0.5 | A | A |
| Example 2 | Phosphoric acid | 10 | Silver-carrying glass | Siloxane compound | Present | 1.5 | 3.1 | 0.5 | A | A |
| Example 3 | Phosphoric acid | 0.1 | Silver-carrying glass | Siloxane compound | Present | 3.5 | 5.5 | 0.5 | B | A |
| Example 4 | Malic acid | 1 | Silver-carrying glass | Siloxane compound | Present | 4.5 | 3.9 | 0.5 | A | A |
| Example 5 | Malic acid | 10 | Silver-carrying glass | Siloxane compound | Present | 3.2 | 2.7 | 0.5 | A | A |
| Example 6 | Phosphoric acid | 1 | - | Siloxane compound | Present | 1.9 | 4.9 | 0.5 | A | C |
| Comparative Example 1 | - | - | - | - | Present | 6.5 | 7.0 | 0.5 | C | C |
| Comparative Example 2 | Acetic acid | 1 | - | - | Present | 4.8 | 6.6 | 0.5 | C | C |

As shown in Table 1, the antiviral properties were favorable in Examples 1 to 6 in which the pH of the film surface was lower than or equal to 6.

In a case where Examples 1 to 6 were compared with each other, the antiviral properties were more favorable in Examples 1, 2, and 4 to 6 in which the pH of the film surface was lower than or equal to 5 than in Example 3 in which the pH of the film surface was not lower than or equal to 5.

In a case where Examples 1 to 6 were compared with each other, the antibacterial properties were more favorable in Examples 1 to 5 in which the antibacterial agent fine particles (a silver-carrying inorganic oxide) were included than in Example 6 in which the antibacterial agent fine particles (a silver-carrying inorganic oxide) were not included.

On the other hand, antiviral properties were deteriorated in Comparative Examples 1 and 2 in which the pH of the film surface was higher than 6. In Comparative Examples 1 and 2, the antibacterial agent fine particles were not included, and the antibacterial properties were inadequate.

## Claims

1. An antiviral film comprising:
a silicon-containing compound,
wherein a pH of a film surface is lower than or equal to 6.

2. The antiviral film according to claim 1, further comprising:
an antibacterial agent fine particle.

3. The antiviral film according to claim 1 or 2, further comprising:
an acidic material.

4. The antiviral film according to claim 3,
wherein the acidic material is at least one selected from the group consisting of phosphoric acid and malic acid.
